(19) Europäisches Patentamt
European Patent Office
Office européen des brevets

(11) EP 1 691 221 A1

(12) **EUROPEAN PATENT APPLICATION**
published in accordance with Art. 158(3) EPC

(43) Date of publication:
**16.08.2006 Bulletin 2006/33**

(21) Application number: **03777195.3**

(22) Date of filing: **03.12.2003**

(51) Int Cl.:
***G02B 5/30*** *(2006.01)* ***C08F 8/04*** *(2006.01)*
***C08J 5/18*** *(2006.01)* *C08L 45/00 (2006.01)*

(86) International application number:
**PCT/JP2003/015463**

(87) International publication number:
**WO 2005/054910 (16.06.2005 Gazette 2005/24)**

(84) Designated Contracting States:
**AT BE BG CH CY CZ DE DK EE ES FI FR GB GR HU IE IT LI LU MC NL PT RO SE SI SK TR**

(71) Applicant: **JSR Corporation**
**Tokyo 104-8410 (JP)**

(72) Inventors:
- **SEKIGUCHI, Masayuki,**
**c/o JSR CORPORATION**
**Chuo-ku, Tokyo 104-8410 (JP)**
- **HIRONO, Tatsuya,**
**c/o JSR CORPORATION**
**Chuo-ku, Tokyo 104-8410 (JP)**

(74) Representative: **TBK-Patent**
**Bavariaring 4-6**
**80336 München (DE)**

# (54) WAVE PLATE FOR LASER OPTICAL SYSTEM

(57) A wavelength plate laser optical system which is a wavelength plate using a stretched and oriented film containing a cyclic olefin based resin, and which has values of the formula (a): Re(λ)/λ (wherein λ, represents a wavelength (nm) of the laser beam; and Re(λ) represents a retardation value (nm) of the laser beam having transmitted through the wavelength plate) against two laser beams having a different wavelength such that the value is ((0.2 to 0.3) + X) for a first laser beam and that the value is ((0.8 to 1.2) + Y) for a second laser beam, respectively (wherein X represents 0 or the number of an integral multiple of 0.5; and Y represents 0 or an integer of 1 or more). It is possible to provide a wavelength plate for optical information recording and reproducing devices, which is excellent in initial characteristics, is hardly affected by the use environment and the manufacturing environment, is excellent in long-term reliability, and is corresponding to two laser beams having a different wavelength.

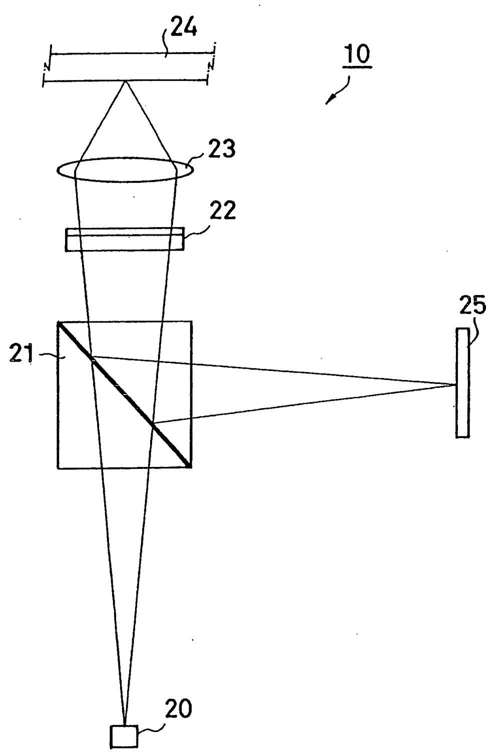


EP 1 691 221 A1

## Description

TECHNICAL FIELD

The present invention relates to a wavelength plate for optical information recording and reproducing device using a stretched and oriented film containing a cyclic olefin based resin, which is corresponding to two laser beams having a different wavelength.

BACKGROUND ART

An optical disk device is an optical information recording and reproducing device which has recently extended largely because of reasons such as non-contact, a large quantity of information per unit volume, high-speed access properties, and low costs, and various recording media are developed while utilizing such characteristic features. For example, there have been developed compact disk (CD), laser disk (LD), CR-ROM, DVD-ROM, and the like, which reproduce previously recorded information as sounds, images or computer programs; CD-R and DVD-R which can write information only one time by laser and reproduce the subject information; and magneto-optical disk (MO), DVD-RAM, DVD-RW, and the like, which can perform repeated recording and reproduction of information.

As an optical device for recording and/or reproducing information in such an optical information recording and reproducing device, there is known an optical pick-up device in which a polarizing beam splitter (PBS) and a 1/4 λ wavelength plate (QWP) (hereinafter sometimes referred to as "quarter wavelength plate") are aligned in the middle of an optical path from a laser beam source to an optical detector.

The quarter wavelength plate as referred to herein is one that provides a λ/4 optical path difference (accordingly, a retardation of π/2) between polarizing components having a specific wavelength and intersecting each other. In the foregoing optical pick-up device, linearly polarized light (S wave) is irradiated from a laser beam source, passes through the PBS and then passes through the quarter wavelength plate, whereby the linearly polarized light becomes circularly polarized light, and the circularly polarized light is then irradiated to an optical recording medium by a condenser lens. It is constructed in such a manner that return light which has been reflected from the optical recording medium again follows the same course and passes through the quarter wavelength plate, whereby the azimuth of the circularly polarized light is converted by 90 degrees and the circularly polarized light becomes linearly polarized light (P wave), and the linearly polarized light then passes through the PBS and is guided into an optical detector.

As a rewritable type magneto-optical disk device, there is known one in which a 1/2 λ wavelength plate (hereinafter sometimes referred to as "half wavelength plate") is aligned in the middle of an optical path wherein irradiated light from a laser beam source passes through a polarizer and PBS and is irradiated to a magneto-optical disk, and return light which has been reflected by the magneto-optical disk again passes through the PBS and reaches an optical detector.

The half wavelength plate as referred to herein is one that provides a λ/2 optical path difference (accordingly, a retardation of π) between polarizing components having a specific wavelength and intersecting each other.

As such wavelength plates, there have hitherto been used inorganic wavelength plates such as wavelength plates formed of a single crystal provided with birefringence, such as mica, quartz, rock crystal, calcite, $LiNbO_3$, and $LiTaO_3$; wavelength plates having a birefringent film on the surface of a base substrate obtained by obliquely vapor depositing an inorganic material to a base substrate such as a glass substrate; and wavelength plates having an LB (Langmuir-Blodget) film having birefringence.

There have been used wavelength plates prepared by bonding a film obtained by stretching and orienting a transparent resin film such as polycarbonate (PC), triacetyl acetate (TAC), polyvinyl alcohol (PVA), polyvinyl butyral (PVB), polyethylene terephthalate (PET), polypropylene (PP), polyallylates, polysulfones, polyethersulfones, and acrylic resins, thereby providing a function to impart a retardation to transmitted light (this film will be referred to as "retardation film") onto a glass substrate for the purpose of keeping flatness and shaping or interposing this film between two glass substrates.

However, in the case where a film obtained by stretching the foregoing conventional transparent resin film is used as a retardation film, there is some possibility that problems in optical characteristics and durability such as transparency and stability in retardation value are generated. Further, since a resin film of a PC, TAC, PVA or PET base, which has hitherto been most generally used as a retardation film, is low in glass transition temperature (Tg) and inferior in heat resistance, there are involved such problems that the temperature of a step of manufacturing an optical device for undergoing reproduction and/or once writing, for example, the temperature in a soldering or bonding step, is limited and that the characteristics are changed due to the continuous use.

Recently, DVD is being rapidly spread as a high-density information recording medium. On the other hand, reproduction-only optical disks such as CD, CR-ROM, and CD-R are already widely spread in the market. Therefore, optical disk devices are eagerly required such that they can be used for recording or reproducing against these various

optical disks having a different system. Further, following an enlargement of the application field, realization of miniaturization and low price is required.

In order to cope with these requirements, it has been proposed to use a wide-band wavelength plate (retardation plate) for corresponding to plural reading and writing lasers (JP-A-2001-101700 and JP-A-2001-208913).

However, in the case of providing a wide-band wavelength plate using plural sheets of retardation films, the retardation value of the respective retardation films is gradually changed, and a delicate sticking angle for coping with the wide band is gradually changed due to the continuous used over a long period of time depending upon the use environment. As a result, there is caused a problem that the good characteristics which have been obtained at the initial stage cannot be kept.

Under such a circumstance of the foregoing problems of the conventional technologies, the invention has been made and provides a wavelength plate for optical information recording and reproducing device, which is excellent in initial characteristics, is hardly affected by the use environment and the manufacturing environment, is excellent in long-term reliability, and is corresponding to two laser beams having a different wavelength.

DISCLOSURE OF THE INVENTION

In order to solve the foregoing problems of the conventional technologies, the present inventors made extensive and intensive investigations. As a result, it has been found that a wavelength plate using a retardation film resulting from stretching and orienting a film containing a cyclic olefin based resin which is excellent in heat resistance, has low hygroscopicity, has high adhesion to various materials, and is excellent in stability of retardation (this film will be hereinafter referred to as "cyclic olefin based resin film") and having values of the following formula (a) against two laser beams having a different wavelength such that the value is ((0.2 to 0.3) + X) for a first laser beam and that the value is ((0.8 to 1.2) + Y) for a second laser beam, respectively (wherein X represents 0 or the number of an integral multiple of 0.5; and Y represents 0 or an integer of 1 or more) is optimum as a wavelength plate for optical information recording and reproducing device which is excellent in initial characteristics, is hardly affected by the use environment and the manufacturing environment, is excellent in long-term reliability, and is corresponding to two laser beams having a different wavelength, leading to accomplishment of the invention.

$$Re(\lambda)/\lambda \qquad (a)$$

wherein λ represents a wavelength (nm) of the laser beam; and Re(λ) represents a retardation value (nm) of the laser beam having transmitted through the wavelength plate.

It has been found that in the case where plural sheets of retardation films made of a cyclic olefin based resin film are laminated to form a wavelength plate, by sticking such that the respective optical axes become parallel, a wavelength plate which is hardly affected by the use environment and the manufacturing environment and excellent in long-term reliability is obtained, leading to accomplishment of the invention.

Further, it has been found that by bonding and fixing a retardation film made of a cyclic olefin based resin film onto a transparent support, the long-term reliability is especially improved, leading to accomplishment of the invention.

BRIEF DESCRIPTION OF THE DRAWING

Fig. 1 is an outline construction view of one embodiment of an optical pickup device to which the wavelength plate of the invention can be applied.

BEST MODE FOR CARRYING OUT THE INVENTION

In the wavelength plate of the invention, a cyclic olefin based film is used. Examples of the cyclic olefin based resin include the following (co)polymers.

(1) A ring-opening polymer of a specific monomer represented by the following general formula (1).
(2) A ring-opening copolymer of a specific monomer represented by the following general formula (1) and a copolymerizable monomer.
(3) A hydrogenated (co)polymer of the foregoing ring-opening (co)polymer (1) or (2).
(4) A (co)polymer resulting from cyclization of the foregoing ring-opening (co)polymer (1) or (2) by the Friedel-Crafts

reaction and then hydrogenation.

(5) A saturated copolymer of a specific monomer represented by the following general formula (1) and an unsaturated double bond-containing compound.

(6) An addition type (co)polymer of at least one monomer selected from a specific monomer represented by the following general formula (1), a vinyl based cyclic hydrocarbon based monomer and a cyclopentadiene based monomer, and a hydrogenated (co)polymer thereof.

General Formula (1)

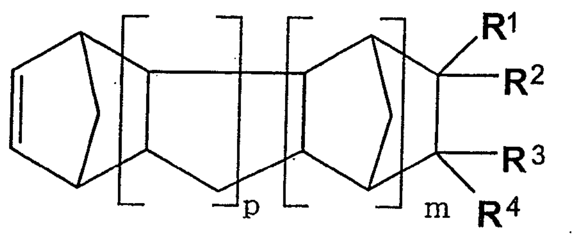

In the formula, $R^1$ to $R^4$ each represents a hydrogen atom, a halogen atom, a hydrocarbon group having from 1 to 30 carbon atoms, or other monovalent organic group, and may be the same or different. $R^1$ and $R^2$, or $R^3$ and $R^4$ may be taken together to form a divalent hydrocarbon group; and $R^1$ or $R^2$ and $R^3$ or $R^4$ may be bonded to each other to form a monocyclic or polycyclic structure. m represents 0 or a positive integer; and p represents 0 or a positive integer.

Specific monomer

Specific examples of the foregoing specific monomer will be given below, but it should not be construed that the invention is limited to these specific examples.

Bicyclo[2.2.1]hept-2-ene
Tricyclo[5.2.1.$0^{2,6}$]-8-decene
Tricyclo[4.4.0.$1^{2,5}$]-3-undecene
Tetracyclo[4.4.0.$1^{2,5}$.$1^{7,10}$]-3-dodecene
Pentacyclo[6.5.1.$1^{3,6}$.$0^{2,7}$.$0^{9,13}$]-4-pentadecene
5-Methylbicyclo[2.2.1]hept-2-ene
5-Ethylbicyclo[2.2.1]hept-2-ene
5-Methoxycarbonylbicyclo[2.2.1]hept-2-ene
5-Methyl-5-methoxycarbonylbicyclo[2.2.1]hept-2-ene
5-Cyanobicyclo[2.2.1]hept-2-ene
8-Methoxycarbonyltetracyclo[4.4.0.$1^{2,5}$.$1^{7,10}$]-3-dodecene
8-Ethoxycarbonyltetracyclo[4.4.0.$1^{2,5}$.$1^{7,10}$]-3-dodecene
8-n-Propoxycarbonyltetracyclo[4.4.0.$1^{2,5}$.$1^{7,10}$]-3-dodecene
8-Isopropoxycarbonyltetracyclo[4.4.0.$1^{2,5}$.$1^{7,10}$]-3-dodecene
8-n-Butoxycarbonyltetracyclo[4.4.0.$1^{2,5}$.$1^{7,10}$]-3-dodecene
8-Methyl-8-methoxycarbonyltetracyclo[4.4.0.$1^{2,5}$.$1^{7,10}$]-3-dodecene
8-Methyl-8-ethoxycarbonyltetracyclo[4.4.0.$1^{2,5}$.$1^{7,10}$]-3-dodecene
8-Methyl-8-n-propoxycarbonyltetracyclo[4.4.0.$1^{2,5}$.$1^{7,10}$]-3-dodecene
8-Methyl-8-isopropoxycarbonyltetracyclo[4.4.0.$1^{2,5}$.$1^{7,10}$]-3-dodecene
8-Methyl-8-n-butoxycarbonyltetracyclo[4.4.0.$1^{2,5}$.$1^{7,10}$]-3-dodecene
5-Ethylidenebicyclo[2.2.1]hept-2-ene
8-Ethylidenetetracyclo[4.4.0.$1^{2,5}$.$1^{7,10}$]-3-dodecene
5-Phenylbicyclo[2.2.1]hept-2-ene
8-Phenyltetracyclo[4.4.0.$1^{2,5}$.$1^{7,10}$]-3-dodecene
5-Fluorobicyclo[2.2.1]hept-2-ene
5-Fluoromethylbicyclo[2.2.1]hept-2-ene
5-Trifluoromethylbicyclo[2.2.1]hept-2-ene
5-Pentafluoroethylbicyclo[2.2.1]hept-2-ene
5,5-Difluorobicyclo[2.2.1]hept-2-ene

5,6-Difluorobicyclo[2.2.1]hept-2-ene
5,5-Bis(trifluoromethyl)bicyclo[2.2.1]hept-2-ene
5,6-Bis(trifluoromethyl)bicyclo[2.2.1]hept-2-ene
5-Methyl-5-trifluoromethylbicyclo[2.2.1]hept-2-ene
5,5,6-Trifluorobicyclo[2.2.1]hept-2-ene
5,5,6-Tris(fluoromethyl)bicyclo[2.2.1]hept-2-ene
5,5,6,6-Tetrafluorobicyclo[2.2.1]hept-2-ene
5,5,6,6-Tetrakis(trifluoromethyl)bicyclo[2.2.1]hept-2-ene
5,5-Difluoro-6,6-bis(trifluoromethyl)bicyclo[2.2.1]hept-2-ene
5,6-Difluoro-5,6-bis(trifluoromethyl)bicyclo[2.2.1]hept-2-ene
5,5,6-Trifluoro-5-trifluoromethylbicyclo[2.2.1]hept-2-ene
5-Fluoro-5-pentafluoroethyl-6,6-bis(trifluoromethyl)bicyclo[2.2.1]hept-2-ene
5,6-Difluoro-5-heptafluoroisopropyl-6-trifluoromethylbicyclo[2.2.1]hept-2-ene
5-Chloro-5,6,6-trifluorobicyclo[2.2.1]hept-2-ene
5,6-Dichloro-5,6-bis(trifluoromethyl)bicyclo[2.2.1]hept-2-ene
5,5,6-Trifluoro-6-trifluoromethoxybicyclo[2.2.1]hept-2-ene
5,5,6-Trifluoro-6-heptafluoropropoxybicyclo[2.2.1]hept-2-ene
8-Fluorotetracyclo[4.4.0.$1^{2,5}$.$1^{7,10}$]-3-dodecene
8-Fluoromethyltetracydo[4.4.0.$1^{2,5}$.$1^{7,10}$]-3-dodecene
8-Difluoromethyltetracyclo[4.4.0.$1^{2,5}$.$1^{7,10}$]-3-dodecene
8-Trifluoromethyltetracyclo[4.4.0.$1^{2,5}$.$1^{7,10}$]-3-dodecene
8-Pentafluoroethyltetracyclo[4.4.0.$1^{2,5}$.$1^{7,10}$]-3-dodecene
8,8-Difluorotetracyclo[4.4.0.$1^{2,5}$.$1^{7,10}$]-3-dodecene
8,9-Difluorotetracyclo[4.4.0.$1^{2,5}$.$1^{7,10}$]-3-dodecene
8,8-Bis(trifluoromethyl)tetracyclo[4.4.0.$1^{2,5}$.$1^{7,10}$]-3-dodecene
8,9-Bis(trifluoromethyl)tetracyclo[4.4.0.$1^{2,5}$.$1^{7,10}$]-3-dodecene
8-Methyl-8-trifluoromethyltetracyclo[4.4.0.$1^{2,5}$.$1^{7,10}$]-3-dodecene
8,8,9-Trifluorotetracyclo[4.4.0.$1^{2,5}$.$1^{7,10}$]-3-dodecene
8,8,9-Tris(trifluoromethyl)tetracyclo[4.4.0.$1^{2,5}$.$1^{7,10}$]-3-dodecene
8,8,9,9-Tetrafluorotetracyclo[4.4.0.$1^{2,5}$.$1^{7,10}$]-3-dodecene
8,8,9,9-Tetrakis(trifluoromethyl)tetracyclo[4.4.0.$1^{2,5}$.$1^{7,10}$]-3-dodecene
8,8-Difluoro-9,9-bis(trifluoromethyl)tetracyclo[4.4.0.$1^{2,5}$.$1^{7,10}$]-3-dodecene
8,9-Difluoro-8,9-bis(trifluoromethyl)tetracyclo[4.4.0.$1^{2,5}$.$1^{7,10}$]-3-dodecene
8,8,9-Trifluoro-9-trifluoromethyltetracyclo[4.4.0.$1^{2,5}$.$1^{7,10}$]-3-dodecene
8,8,9-Trifluoro-9-trifluoromethoxytetracyclo[4.4.0.$1^{2,5}$.$1^{7,10}$]-3-dodecene
8,8,9-Trifluoro-9-pentafluoropropoxytetracyclo[4.4.0.$1^{2,5}$.$1^{7,10}$]-3-dodecene
8-Fluoro-8-pentafluoroethyl-9,9-bis(trifluoromethyl)tetracyclo[4.4.0.$1^{2,5}$.$1^{7,10}$]-3-dodecene
8,9-Difluoro-8-heptafluoroisopropyl-9-trifluoromethyltetracyclo[4.4.0.$1^{2,5}$.$1^{7,10}$] -3-dodecene
8-Chloro-8,9,9-trifluorotetracyclo[4.4.0.$1^{2,5}$.$1^{7,10}$]-3-dodecene
8,9-Dichloro-8,9-bis(trifluoromethyl)tetracyclo[4.4.0.$1^{2,5}$.$1^{7,10}$]-3-dodecene
8-(2,2,2-Trifluoroethoxycarbonyl)tetracyclo[4.4.0.$1^{2,5}$.$1^{7,10}$]-3-dodecene
8-Methyl-8-(2,2,2-trifluoroethoxycarbonyl)tetracyclo[4.4.0.$1^{2,5}$.$1^{7,10}$]-3-dodecene

These can be used singly or in combinations of two or more kinds thereof.

Of the specific monomers, ones represented by the foregoing general formula(1) wherein $R^1$ and $R^3$ each represents a hydrogen atom or a hydrocarbon group having from 1 to 10 carbon atoms, more preferably a hydrogen atom or a hydrocarbon group having from 1 to 4 carbon atoms, and especially preferably a hydrogen atom or a hydrocarbon group having from 1 to 2 carbon atoms; $R^2$ and $R^4$ each represents a hydrogen atom or a monovalent organic group, and at least one of $R^2$ and $R^4$ represents a polar group having polarity other than a hydrogen atom and a hydrocarbon group; and $\underline{m}$ represents an integer of from 0 to 3, and $\underline{p}$ represents an integer of from 0 to 3, more preferably (m + p) = 0 to 4, further preferably (m + p) = 0 to 2, and especially preferably, m = 1 and p = 0 are preferable. The specific monomers wherein m = 1 and p = 0 are preferable because the resulting cyclic olefin based resins have a high glass transition temperature and excellent mechanical strength.

Examples of the polar group of the foregoing specific monomers include a carboxyl group, a hydroxyl group, an alkoxycarbonyl group, an aryloxycarbonyl group, an amino group, an amide group, and a cyano group. These polar groups may be bonded via a connecting group such as a methylene group. Also, hydrocarbon groups in which a divalent organic group having polarity, such as a carbonyl group, an ether group, a silyl ether group, a thioether group, and an imino group, is bonded as a connecting group are enumerated as the polar group. Of these, a carboxyl group, an

alkoxycarbonyl group, and an aryloxycarbonyl group are preferable; and an alkoxycarbonyl group and an aryloxycarbonyl group are especially preferable.

Further, a monomer in which at least one of $R^2$ and $R^4$ is a polar group represented by the formula, $-(CH_2)_nCOOR$, is preferable because the resulting cyclic olefin based resin has a high glass transition temperature, low hygroscopicity, and excellent adhesion to various materials. In the formula directed to the foregoing specific polar group, R represents a hydrocarbon group having preferably from 1 to 12 carbon atoms, more preferably from 1 to 4 carbon atoms, and especially preferably from 1 to 2 carbon atoms, and preferably an alkyl group. Also, n is usually from 0 to 5; and a smaller value of n is preferable because the glass transition temperature of the resulting cyclic olefin based resin is high. Further, the specific monomer wherein n is 0 is preferable because its synthesis is easy.

In the foregoing general formula (1), $R^1$ or $R^3$ is preferably an alkyl group, an alkyl group having from 1 to 4 carbon atoms, further preferably an alkyl group having from 1 to 2 carbon atoms, and especially preferably a methyl group. In particular, it is preferable that this alkyl group is bonded to the same carbon atom as a carbon atom to which a specific polar group represented by the foregoing formula, $-(CH_2)_nCOOR$, is bonded because the hygroscopicity of the resulting cyclic olefin based resin can be made low.

Of the foregoing specific examples of the specific monomer, 8-methyl-8-methoxycarbonyltetracyclo[4.4.0.$1^{2,5}$.$1^{7,10}$]-3-dodecene is the most preferable in view of the heat resistance of the resulting ring-opening polymer and the matter that a change of the retardation before and after sticking when plural sheets are stuck at the time of use as the wavelength plate of the invention.

Copolymerizable monomer

Specific examples of the copolymerizable monomer include cycloolefins such as cyclobutene, cyclopentene, cycloheptene, cyclooctene, and dicyclopentadiene. The carbon atom number of the cycloolefin is preferably from 4 to 20, and more preferably from 5 to 12. These can be used singly or in combinations of two or more kinds thereof

A use range of the specific monomer to the copolymerizable monomer is preferably from 100/0 to 50/50, and more preferably from 100/0 to 60/40 in terms of a weight ratio.

Ring-opening polymerization catalyst

In the invention, the ring-opening polymerization reaction for obtaining the ring-opening polymer (1) of a specific monomer and the ring-opening copolymer (2) of a specific monomer and a copolymerizable monomer is carried out in the presence of a metathesis catalyst.

This metathesis catalyst is a catalyst comprising a combination of (a) at least one member selected from W, Mo and Re compounds and (b) at least one member selected from compounds of the IA group elements (for example, Li, Na, and K), the IIA group elements (for example, Mg and Ca), the IIB group elements (for example, Zn, Cd, and Hg), the IIIA group elements (for example, B and Al), the IVA group elements (for example, Si, Sn, and Pb), or the IVB group elements (for example, Ti and Zr) of the Deming's periodic table and containing at least one bond of the element to carbon or bond of the element to hydrogen. In this case, for the purpose of enhancing the activity of the catalyst, the catalyst may be one having (c) an additive as described later added thereto.

Representative examples of the W, Mo or Re compounds which are suitable as the component (a) include compounds described in page 8, left-hand lower half column, line 6 to page 8, right-hand upper half column, line 17 of JP-A-1-132626, such as $WCl_6$, $MoCl_5$, and $ReOCl_3$.

Specific examples of the component (b) include compounds described in page 8, right-hand upper half column, line 18 to page 8, right-hand lower half column, line 3 of JP-A-1-132626, such as $n\text{-}C_4H_9Li$, $(C_2H_5)_3Al$, $(C_2H_5)_2AlCl$, $(C_2H_5)_{1.5}AlCl_{1.5}$, $(C_2H_5)AlCl_2$, methylalumoxane, and LiH.

As representative examples of the compound (c) which is an additive, alcohols, aldehydes, ketones, amines, and the like can be suitably used. Further, compounds described in page 8, right-hand lower half column, line 16 to page 9, left-hand upper half column, line 17 of JP-A-1-132626 can be used.

With respect to the amount of the metathesis catalyst to be used, a molar ratio of the foregoing component (a) to the specific monomer is usually in the range of from 1/500 to 1/50,000, and preferably in the range of from 1/1,000 to 1/10,000 in terms of "component (a) to specific monomer".

With respect to the proportion of the component (a) and the component (b), a metal atom ratio of (a) to (b) is in the range of from 1/1 to 1/50, and preferably from 1/2 to 1/30.

With respect to proportion of the component (a) and the component (c), a molar ratio of (c) to (a) is in the range of from 0.005/1 to 15/1, and preferably from 0.05/1 to 7/1.

Solvent for polymerization reaction

Examples of a solvent which is used in the ring-opening polymerization reaction (a solvent constituting a molecular weight modifier solution and a solvent of the specific monomer and/or the metathesis catalyst) include alkanes such as pentane, hexane, heptane, octane, nonane, and decane; cycloalkanes such as cyclohexane, cycloheptane, cyclooctane, decalin, and norbornane; aromatic hydrocarbons such as benzene, toluene, xylene, ethylbenzene, and cumene; compounds such as halogenated alkanes and halogenated aryls including chlorobutane, bromohexane, methylene chloride, dichloroethane, hexamethylene dibromide, chlorobenzene, chloroform, and tetrachloroethylene; saturated carboxylic acid esters such as ethyl acetate, n-butyl acetate, isobutyl acetate, methyl propionate, and dimethoxyethane; and ethers such as dibutyl ether, tetrahydrofuran, and dimethoxyethane. These can be used singly or in mixtures. Of these, aromatic hydrocarbons are preferable.
The amount of the solvent to be used is usually from 1/1 to 10/1, and preferably from 1/1 to 5/1 in terms of "solvent to specific monomer (weight ratio)".

Molecular weight modifier

Although it is possible to adjust the molecular weight of the ring-opening (co)polymer to be obtained depending upon the polymerization temperature, the kind of catalyst, and the kind of solvent, the adjustment is achieved by making a molecular weight modifier co-present in the reaction system in the invention.
Examples of the molecular weight modifier that is suitable include styrene as well as α-olefins such as ethylene, propene, 1-butene, 1-pentene, 1-hexene, 1-heptene, 1-octene, 1-nonene, and 1-decene. Of these, 1-butene and 1-hexene are especially preferable.
These molecular weight modifies can be used singly or as mixtures of two or more kinds thereof.
The amount of the molecular weight modifier to be used is from 0.005 to 0.6 moles, and preferably from 0.02 to 0.5 moles per mole of the specific monomer to be provided for the ring-opening polymerization reaction.
For the purpose of obtaining the ring-opening copolymer (2), the specific monomer and the copolymerizable monomer may be subjected to ring-opening copolymerization. However, the specific monomer may be further subjected to ring-opening polymerization in the presence of a conjugated diene based polymer such as polybutadiene and polyisoprene, a styrene-butadiene copolymer, an ethylene-non-conjugated diene copolymer, an unsaturated hydrocarbon based polymer containing two or more carbon-carbon double bonds in the major chain such as polynorbornene, or the like.
The thus obtained ring-opening (co)polymer is used as it is. However, the hydrogenated (co)polymer (3) which is obtained by further hydrogenating the ring-opening (co)polymer is useful as a raw material for resins having large impact resistance.

Hydrogenation catalyst

The hydrogenation reaction is carried out by a usual method. That is, the hydrogenation reaction is carried out by adding a hydrogenation catalyst in a solution of the ring-opening polymer and acting a hydrogen gas of from the atmospheric pressure to 300 atmospheres, and preferably from 3 to 200 atmospheres on the mixture at from 0 to 200°C, and preferably from 20 to 180°C.
As the hydrogenation catalyst, ones which are used for the usual hydrogenation reaction of olefinic compounds can be used. Examples of this hydrogenation catalyst include heterogeneous catalysts and homogeneous catalysts.
Examples of the heterogeneous catalyst include solid catalysts in which a noble metal catalyst substance such as palladium, platinum, nickel, rhodium, and ruthenium is supported on a carrier such as carbon, silica, alumina, and titania. Examples of the homogeneous catalyst include nickel naphthenate/triethylaluminum, nickel acetylacetonate/triethylaluminum, cobalt octenate/n-butyllithium, titanocene dichloride/diethylaluminum monochloride, rhodium acetate, chlorotris(triphenylphosphine)rhodium, dichlorotris(triphenylphosphine)ruthenium, chlorohydrocarbonyl-tris(triphenylphosphine)ruthenium, and dichlorocarbonyltris(triphenylphosphine)-ruthenium. The shape of the catalyst may be powdered or particulate.
Such a hydrogenation catalyst is used in a proportion such that the weight ratio of the ring-opening (co)polymer to the hydrogenation catalyst is from $1/1 \times 10^{-6}$ to 1/2.
In this way, the hydrogenated (co)polymer obtained by hydrogenation has excellent heat stability, and its characteristics are not deteriorated even by heating at the time of molding processing or at the time of use as a product. The hydrogenation degree is usually 50% or more, preferably 70% or more, and more preferably 90% or more.
It is possible to stabilize the thus obtained ring-opening (co)polymer by adding thereto known antioxidants such as 2,6-di-t-butyl-4-methylphenol, 2,2'-dioxy- 3,3'-dit-butyl-5,5'-dimethyldiphenylmethane, and tetrakis[methylene-3-(3,5-di-t-butyl-4-hydroxyphenyl)propionato]methane; ultraviolet absorbers such as 2,4-dihydroxybenzophenone and 2-hydroxy-4-methoxybenzophenone; and the like. Also, for the purpose of improving the processability, additives such as

lubricants can be added.

The hydrogenation degree of the hydrogenated (co)polymer is 50% or more, preferably 90% or more, more preferably 98% or more, and most preferably 99% or more in terms of a value as measured by $^1$H-NMR at 500 MHz. The higher the hydrogenation degree, the more excellent the stability against heat or light is. Thus, when used as the wavelength plate of the invention, stable characteristics can be obtained over a long period of time.

The hydrogenated (co)polymer which is used as the cyclic olefin based resin of the invention preferably has a gel content in the hydrogenated (co)polymer of 5% by weight or less, and especially preferably 1% by weight or less.

As the cyclic olefin based resin of the invention, the (co)polymer (4) resulting from cyclization of the foregoing ring-opening (co)polymer (1) or (2) by the Friedel-Crafts reaction and then hydrogenation can also be used.

Cyclization by the Friedel-Crafts reaction

Although the method for cyclizing the ring-opening (co)polymer (1) or (2) by the Friedel-Crafts reaction is not particularly limited, a known method using an acidic compound as described in JP-A-50-154399 can be employed. Specific examples of the acidic compound which is used include Lewis acids and Bronsted acids such as $AlCl_3$, $BF_3$, $FeCl_3$, $Al_2O_3$, HCl, $CH_3ClCOOH$, zeolite, and activated clay.

The cyclized ring-opening (co)polymer can be subjected to hydrogenation in the same manner as in the ring-opening (co)polymer (1) or (2).

As the cyclic olefin based resin of the invention, the saturated copolymer (5) of a specific monomer represented by the following general formula (1) and an unsaturated double bond-containing compound can be used.

Unsaturated double bond-containing compound

Examples of the unsaturated double bond-containing compound include olefin based compounds preferably having from 2 to 12 carbon atoms, and more preferably from 2 to 8 carbon atoms, such as ethylene, propylene, and butene.

A range of the specific monomer to the unsaturated double bond-containing compound to be used is preferably from 90/10 to 40/60, and more preferably from 85/15 to 50/50 in terms of a weight ratio.

In the invention, in order to obtain the saturated copolymer (5) of a specific monomer and an unsaturated double bond-containing compound, a usual addition polymerization method can be employed.

Addition polymerization catalyst

As a catalyst for synthesizing the foregoing saturated copolymer (5), at least one member selected from titanium compounds, zirconium compounds, and vanadium compounds and an organoaluminum compound as a co-catalyst are used.

Examples of the titanium compound include titanium tetrachloride and titanium trichloride; and examples of the zirconium compound include bis(cyclopentadienyl)zirconium chloride and bis(cyclopentadienyl)zirconium dichloride.

Examples of the vanadium compound include vanadium compounds represented by the following general formulae and electron donative addition materials thereof

$$VO(OR)_aX_b \text{ or } V(OR)_cX_d$$

wherein R represents a hydrocarbon group; X represents a halogen atom; and $0 \le a \le 3$, $0 \le b \le 3$, $2 \le (a + b) \le 3$, $0 \le c \le 4$, $0 \le d \le 4$, and $3 \le (c + d) \le 4$.

Examples of the foregoing electron donor include oxygen-containing electron donors such as alcohols, phenols, ketones, aldehydes, carboxylic acids, esters of organic acids or inorganic acids, ethers, acid amides, acid anhydrides, and alkoxysilanes; and nitrogen-containing electron donors such as ammonia, amines, nitriles, and isocyanates.

As the organoaluminum compound as a co-catalyst, at least one member selected from compounds containing at least one aluminum-carbon bond or compounds containing at least one aluminum-hydrogen bond is used.

In the above, for example, in the case of using a vanadium compound, with respect to the ratio of the vanadium compound and the aluminum compound, a ratio of the aluminum atom to the vanadium atom (Al/V) is in the range of 2 or more, preferably from 2 to 50, and especially preferably from 3 to 20.

As a solvent for polymerization reaction which is used for the addition polymerization, the same solvent as used in the ring-opening polymerization reaction can be used. Adjustment of the molecular weight of the resulting saturated copolymer (5) is usually carried out using hydrogen.

As the cyclic olefin based resin of the invention, the addition type (co)polymer (6) of at least one monomer selected from a specific monomer and a vinyl based cyclic hydrocarbon based monomer or a cyclopentadiene based monomer, and a hydrogenated (co)polymer thereof can be used.

Vinyl based cyclic hydrocarbon based monomer

Examples of the vinyl based cyclic hydrocarbon based monomer include vinylated 5-membered hydrocarbon based monomers including vinylcyclopentene based monomers such as 4-vinylcyclopentene and 2-methyl-4-isopropenylcyclopentene, and vinylcyclopentane based monomers such as 4-vinylcyclopentane and 4-isopropenylcyclopentane; vinylcyclohexene based monomers such as 4-vinylcyclohexene, 4-isopropenylcyclohexene, 1-methyl-4-isopropenylcyclohexene, 2-methyl-4-vinylcyclohexene, and 2-methyl-4-isopropenylcyclohexene; vinylcyclohexane based monomers such as 4-vinylcyclohexane and 2-methyl-4-isopropenylcyclohexane; styrene based monomers such as styrene, α-methylstyrene, 2-methylstyrene, 3-methylstyrene, 4-methylstyrene, 1-vinylnaphthalene, 2-vinylnaphthalene, 4-phenylstyrene, and p-methoxystyrene; terpene based monomers such as d-terpene, 1-terpene, diterpene, d-limonene, 1-limonene, and dipentene; vinylcycloheptene based monomers such as 4-vinylcycloheptene and 4-isopropenylcycloheptene; and vinylcycloheptane based monomers such as 4-vinylcycloheptane and 4-isopropenylcycloheptane. Of these, styrene and α-methylstyrene are preferable. These can be used singly or in combinations of two or more kinds thereof.

Cyclopentadiene based monomer

Examples of the cyclopentadiene based monomer which is used as the monomer of the addition type (co) polymer (6) of the invention include cyclopentadiene, 1-methylcyclopentadiene, 2-methylcyclopentadiene, 2-ethylcyclopentadiene, 5-methylcyclopentadiene, and 5,5-methylcyclopentadiene. Of these, cyclopentadiene is preferable. These can be used singly or in combinations of two or more kinds thereof

The foregoing addition type (co)polymer of at least one monomer selected from a specific monomer, a vinyl based cyclic hydrocarbon based monomer and a cyclopentadiene based monomer can be obtained in the same addition polymerization method as in the foregoing saturated copolymer (5) of a specific monomer and an unsaturated double bond-containing compound.

The hydrogenated (co)polymer of the foregoing addition type (co)polymer can be obtained in the same hydrogenation method as in the foregoing hydrogenated (co)polymer of the ring-opening (co)polymer (3).

The cyclic olefin based resin which is used in the invention has a molecular weight of preferably from 0.2 to 5 dl/g, more preferably from 0.3 to 3 dl/g, and especially preferably from 0.4 to 1.5 dl/g in terms of an inherent viscosity $[\eta]_{inh}$; and has a number average molecular weight (Mn) of preferably from 8,000 to 100,000, more preferably of from 10,000 to 80,000, and especially preferably from 12,000 to 50,000 and a weight average molecular weight (Mw) of preferably from 20,000 to 300,000, more preferably from 30,000 to 250,000, and especially preferably from 40,000 to 200,000, as reduced into polystyrene measured by the gel permeation chromatography (GPC).

By making the inherent viscosity $[\eta]_{inh}$, the number average molecular weight, and the weight average molecular weight fall within the foregoing ranges, a balance between the molding processability, heat resistance, water resistance, chemical resistance and mechanical characteristics and the stability of a retardation when used as the wavelength plate of the invention becomes well.

A glass transition temperature (Tg) of the cyclic olefin based resin which is used in the invention is preferably from 110 to 350°C, more preferably from 115 to 250°C, and especially preferably from 120 to 200°C. What the Tg is lower than 110°C is not preferable because a change of the optical characteristics of the resulting cyclic polyolefin based resin film becomes large due to heat from a laser beam source or its adjacent parts. On the other hand, when the Tg exceeds 350 °C, in the case of processing by heating in the vicinity of Tg by stretching processing or the like, the possibility that the resin causes thermal degradation becomes high.

A saturated water absorption of the cyclic olefin based resin which is used in the invention is preferably in the range of from 0.05 to 2% by weight, and more preferably from 0.1 to 1% by weight at 23°C. When the saturated water absorption falls within this range, the retardation is uniform; the adhesion of the resulting cyclic olefin based resin film to the glass substrate or the like is excellent so that peeling is not generated in the way of use; and the compatibility with an antioxidant, etc. is excellent so that it can be added in a large amount. When the saturated water absorption is less than 0.05% by weight, the adhesion to the glass substrate or the transparent support or the like becomes poor, and peeling is likely generated. On the other hand, when it exceeds 2 % by weight, the cyclic olefin based resin film is liable to cause a dimensional change due to the absorption of water.

The foregoing saturated water absorption is a value obtained by measuring an increased weight after dipping in water at 23°C for one week according to ASTM D570.

As the cyclic olefin based resin which is used in the invention, ones meeting the requirements of a photoelastic coefficient (Cp) of from 0 to 100 ($\times 10^{-12} Pa^{-1}$) and a stress-optical coefficient ($C_R$) of from 1,500 to 4,000 ($\times 10^{-12} Pa^{-1}$) are suitably used.

The photoelastic coefficient ($C_P$) and stress-optical coefficient ($C_R$) are described in various documents (*Polymer Journal,* Vol. 27, No. 9, pp. 943-950 (1995); *Nihon Reoroji Gakkaishi* (Journal of the Society of Rheology, Japan), Vo. 19, No. 2, pp. 93-97 (1991); and *Hikaridansei Jikkenho* (Photoelasticity Experimental Methods), The Nikkankogyo

Shimbun, Ltd., 1975, 7th Ed.). The former expresses a degree of generation of a retardation due to the stress in the glass state of the polymer, and the latter expresses a degree of generation of a retardation due to the stress in the fluidized state.

What the photoelastic coefficient ($C_P$) is large means that in the case where the polymer is used in the glass state, a retardation is likely generated sensitively due to an external factor or a stress generated from a strain as generated from a strain when it is frozen itself, or the like. For example, it is meant that an unnecessary change of retardation is likely generated due to a residual strain at the time of sticking in laminating, or a fine stress generated by shrinkage of the material caused by a temperature change or a humidity change as in the invention. From this matter, it is preferable that the photoelastic coefficient ($C_P$) is as small as possible.

On the other hand, what the stress-optical coefficient ($C_R$) is large brings such advantages that a desired retardation is obtained at a low stretching magnification during imparting revealing properties of retardation to the cyclic olefin based resin film; that a film capable of imparting a large retardation is likely obtained; and that in the case where the same retardation is desired, the film can be made thin as compared with those having a small stress-optical coefficient ($C_R$).

From the foregoing standpoints, the photoelastic coefficient ($C_P$) is preferably from 0 to 100 ($\times 10^{-12}$ $Pa^{-1}$), more preferably from 0 to 80 ($\times 10^{-12}$ $Pa^{-1}$), especially preferably from 0 to 50 ($\times 10^{-12}$ $Pa^{-1}$), further preferably from 0 to 30 ($\times 10^{-12}$ $Pa^{-1}$), and most preferably from 0 to 20 ($\times 10^{-12}$ $Pa^{-1}$). The case where the photoelastic coefficient exceeds 100 ($\times 10^{-12}$ $Pa^{-1}$) is not preferable because in the laminated wavelength plate to be used in the invention, a deviation from the tolerable error range of an optimum sticking optical axis angle is generated due to a stress as generated at the time of sticking or a change of retardation as generated by the environmental change during the use, or the like, resulting in a lowering of the quantity of transmitted light when used as the wavelength plate.

When the cyclic olefin based resin to be used in the invention is formed into a 25 μm-thick film under conditions at 40 °C and 90 % RH, its water vapor permeability is usually from 1 to 400 $g/m^2 \cdot 24$ hr, preferably from 5 to 350 $g/m^2 \cdot 24$ hr, and more preferably from 10 to 300 $g/m^2 \cdot 24$ hr. What the water vapor permeability is made to fall within this range is preferable because it is possible to reduce or avoid a change of the characteristics due to the water content of a pressure-sensitive adhesive or an adhesive to be used for adhering the retardation film to the transparent support, or the humidity of the environment where the wavelength plate is used.

As described previously, although the cyclic olefin based resin which is used in the invention is constituted of the ring-opening (co)copolymer (1) or (2), the hydrogenated (co)polymer (3) or (4), the saturated copolymer (5), or the addition type (co)polymer (6), it can be more stabilized by adding known antioxidants and ultraviolet absorbers and the like thereto. For the sake of improving the processability, additives which are used in the conventional resin processing, such as lubricants, can be added.

The cyclic olefin based resin film which is used for the wavelength plate of the invention can be obtained by forming the foregoing cyclic olefin based resin into a film or sheet by the melt molding method or solution casting method (solvent casting method) or the like. Above all, the solvent casting method is preferable from the standpoints of uniform film thickness and good surface smoothness.

A method for obtaining the cyclic olefin based resin film by the solvent casting method is not particularly limited, and known methods may be employed. For example, there is enumerated a method in which the cyclic olefin based resin of the invention is dissolved or dispersed in a solvent to form a solution having an appropriate concentration, the solution is poured or coated on a suitable carrier, and after drying, the film is peeled apart from the carrier.

Various conditions for the method for obtaining the cyclic olefin based resin film by the solvent casting method will be given below, but it should not be construed that the invention is limited to these various conditions.

In dissolving or dispersing the cyclic olefin based resin in a solvent, the concentration of the resin is usually from 0.1 to 90% by weight, preferably from 1 to 50% by weight, and more preferably from 10 to 35% by weight. When the concentration of the resin is less than the foregoing range, there is some possibility that problems occur such that it becomes difficult to secure the thickness of the film and that it becomes difficult to obtain surface smoothness of the film by expansion caused due to evaporation of the solvent, or the like. On the other hand, what it exceeds the foregoing range is not preferable because the solution viscosity becomes too high, thereby possibly causing a problem in uniformity of the thickness or surface smoothness of the resulting cyclic olefin based resin film.

The viscosity of the foregoing solution at room temperature is usually from 1 to 1,000,000 mPa·s, preferably from 10 to 100,000 mPa·s, more preferably from 100 to 50,000 mPa·s, and especially preferably from 1,000 to 40,000 mPa·s.

Examples of the solvent to be used include aromatic solvents such as benzene, toluene, and xylene; cellosolve based solvents such as methyl cellosolve, ethyl cellosolve, and 1-methoxy-2-propanol; ketone based solvents such as diacetone alcohol, acetone, cyclohexanone, methyl ethyl ketone, and 4-methyl-2-pentanone; ester based solvents such as methyl lactate and ethyl lactate; cycloolefin based solvents such as cyclohexanone, ethylcyclohexanone, and 1,2-dimethylcyclohexanone; halogen-containing solvents such as 2,2,3,3-tetrafluoro-1-propanol, methylene chloride, and chloroform; ether based solvents such as tetrahydrofuran and dioxane; and alcohol based solvents such as 1-pentanol

and 1-butanol.

Besides the foregoing, by using a solvent having an SP value (solubility parameter) in the range of usually from 10 to 30 ($MPa^{1/2}$), preferably from 10 to 25 ($MPa^{1/2}$), more preferably from 15 to 25 ($MPa^{1/2}$), and especially preferably from 15 to 20 ($MPa^{1/2}$), it is possible to obtain a cyclic olefin based resin film having good surface uniformity and optical characteristics.

The foregoing solvents can be used singly or in mixtures of plural kinds thereof. In that case, it is preferable that in the mixed system, the range of the SP value falls within the foregoing range. At this time, the SP value of the mixed system can be expected by a weight ratio. For example, in the mixture of two kinds, when the weight fraction is defined as W1 and W2, respectively, and the SP value is defined as SP1 and SP2, respectively, the SP value of the mixed system can be determined as a value as calculated according to the following formula.

$$(\text{SP value}) = W1 \cdot SP1 + W2 \cdot SP2$$

As a method for producing the cyclic olefin based resin film by the solvent casting method, there is generally enumerated a method in which the foregoing solution is coated on a substrate such as a metal drum, a steel belt, a polyester film such as polyethylene terephthalate (PET) and polyethylene naphthalate (PEN), and a Teflon belt by using a die or a coater, the solvent is subsequently dried, and the film is then peeled apart from the substrate. The cyclic olefin based resin film can be produced by coating the solution on a substrate by spraying, brushing, roll spin coating, dipping, etc., subsequently drying the solvent, and then peeling apart the film from the substrate. The thickness or surface smoothness or the like may be controlled by repeated coating.

The drying step of the foregoing solvent casting method is not particularly limited and can be carried out by a generally employed method, for example, a method for passing in a drying furnace via the plural number of rolls. However, in the drying step, when following evaporation of the solvent, air bubbles are generated, the characteristics of the film are remarkably lowered. Accordingly, for the purpose of avoiding this matter, it is preferable that the drying step is divided into plural steps of two stages or more, thereby controlling the temperature or air flow in each step.

The amount of the residual solvent in the cyclic olefin based resin film is usually 10% by weight or less, preferably 5% by weight or less, more preferably 1% by weight or less, and especially preferably 0.5% by weight or less. What the amount of the residual solvent exceeds 10% by weight is not preferable because in the actual use, a dimensional change with time becomes large. Such is not preferable because the Tg becomes low due to the residual solvent, and the heat resistance is lowered.

For the purpose of suitably performing a stretching step as described later, there may be the case where the foregoing amount of the residual solvent must be properly adjusted within the foregoing range. Concretely, in order to reveal the retardation at the time of stretching and orientation uniformly and stably, there may be the case where the amount of the residual solvent is adjusted usually at from 10 to 0.1% by weight, preferably from 5 to 0.1% by weight, and more preferably from 1 to 0.1% by weight.

By making a trace amount of the solvent remain, there may be the case where the stretching processing becomes easy, or it becomes easy to control the retardation.

Thickness of the cyclic olefin based resin film of the invention is usually from 0.1 to 500 $\mu$m, preferably from 0.1 to 300 $\mu$m, and more preferably from 1 to 250 $\mu$m. When the thickness is less than 0.1 $\mu$m, handling becomes substantially difficult. On the other hand, what it exceeds 500 $\mu$m is not preferable because not only it is difficult to wind up the film in the rolled shape, but also the transmittance may be possibly lowered as the wavelength plate of the invention which is aimed at a high transmittance of laser beams.

Thickness distribution of the cyclic olefin based resin film of the invention is usually within $\pm$20%, preferably +10%, more preferably $\pm$5%, and especially preferably $\pm$3% against the mean value. It is desirable that a fluctuation of the thickness per 1 cm is usually not more than 10%, preferably not more than 5%, more preferably not more than 1%, and especially preferably not more than 0.5%. By performing such a thickness control, it is possible to prevent an unevenness of the retardation in stretching and orientation.

For the retardation film made of a cyclic olefin based resin film, which is used for the wavelength plate of the invention, one prepared by subjecting the cyclic olefin based resin film obtained by the foregoing method to stretching processing is suitably used. Specifically, such a retardation film can be produced by a known uniaxial stretching method or biaxial stretching method. That is, a horizontal uniaxial stretching method by the tenter method, an inter-roll compression stretching method, a vertical uniaxial stretching method utilizing rolls having a different peripheral speed, a biaxial stretching method composed of a combination of horizontal uniaxial stretching and vertical uniaxial stretching, a stretching method by the inflation method, and the like can be employed.

In the case of the uniaxial stretching method, the stretching rate is usually from 1 to 5,000%/min, preferably from 50 to 1,000%/min, further preferably from 100 to 1,000%/min, and especially preferably from 100 to 500%/min.

The case of the biaxial stretching method includes the case where the stretching is carried out at the same time in the two directions and the case where after uniaxial stretching, a stretching treatment is carried out in the direction different from the first stretching direction. In these cases, an intersecting angle of the two stretching axes is usually in the range of from 120 to 60 degrees. The stretching rate may be identical or different in the respective stretching directions; and it is usually from 1 to 5,000%/min, preferably from 50 to 1,000%/min, more preferably from 100 to 1,000%/min, and especially preferably from 100 to 500%/min.

Although the stretching processing temperature is not particularly limited, it is usually in the range of (Tg ± 30°C), preferably (Tg ± 10°C), and more preferably from (Tg - 5°C) to (Tg + 10°C) on the basis of the glass transition temperature (Tg) of the cyclic olefin based resin of the invention. By making the stretching processing temperature fall within the foregoing range, not only it becomes possible to suppress the generation of an unevenness of the retardation, but also it becomes easy to control an index ellipsoid, and therefore, such is preferable.

The stretching magnification is determined by the desired characteristics and therefore, is not particularly limited. However, it is usually from 1.01 to 10 times, preferably from 1.1 to 5 times, and more preferably from 1.1 to 3 times. When the stretching magnification exceeds 10 times, there is some possibility that control of the retardation becomes difficult.

Although the stretched film may be cooled as it is, it is preferable that the stretched film is allowed to stand in the temperature atmosphere at from (Tg - 20°C) to Tg for at least 10 seconds, preferably from 30 seconds to 60 minutes, and more preferably from one minute to 60 minutes. In this way, a retardation film which is little in a change of retardation characteristics with time and stable is obtained.

A linear expansion coefficient of the cyclic olefin based resin film of the invention is preferably $1 \times 10^{-4}$ (1/°C) or less, more preferably $9 \times 10^{-5}$ (1/°C) or less, especially preferably $8 \times 10^{-5}$ (1/°C) or less, and most preferably $7 \times 10^{-5}$ (1/°C) or less, at a temperature in the range of from 20°C to 100°C. In the case of a retardation film, a difference of the linear expansion coefficient between the stretching direction and the vertical direction thereto is preferably $5 \times 10^{-5}$ (1/°C) or less, more preferably $3 \times 10^{-5}$ (1/°C) or less, and especially preferably $1 \times 10^{-5}$ (1/°C) or less. By making the linear expansion coefficient fall within the foregoing range, when the retardation film made of a cyclic olefin based resin film of the invention is formed into the wavelength plate of the invention, a change of the retardation which is brought by a change of the stress caused due to influences such as temperature and humidity at the time of use is suppressed, whereby stability of the characteristics over a long period of time can be obtained when used as the wavelength plate of the invention.

In the thus stretched film, the molecule is oriented by stretching, thereby giving a retardation to the transmitted light. This retardation can be controlled by a retardation value of the film before stretching, stretching magnification, stretching temperature, and thickness of the film after stretching and orientation. Here, the retardation is defined by the product ($\Delta nd$) of a refractive index difference of birefringent light ($\Delta n$) and a thickness (d).

In the case where the film before stretching has a constant thickness, when the stretching magnification of the film is large, an absolute value of the retardation tends to become large. Accordingly, by changing the stretching magnification, it is possible to obtain a retardation film having a desired retardation value.

A retardation value of the retardation film made of a cyclic olefin based resin film, which is used in the invention, is preferably from 10 to 3,000 nm, more preferably from 50 to 2,000 nm, especially preferably from 100 to 1,500 nm, and most preferably from 130 to 1,000 nm at a light beam wavelength of 550 nm.

In the case where the retardation value falls outside the foregoing range, there is some possibility that it becomes difficult to obtain a wavelength plate having a desired specific retardation against two laser beams having a different wavelength.

Also, it is preferable that a wavelength dependency of the retardation of the retardation film made of a cyclic olefin based resin film to be used in the invention, which is represented by the following formula (b), is small as far as possible in the wavelength range of from 400 to 800 nm. The value of the following formula (b) is usually in the range from 0.8 to 1.2, preferably from 0.9 to 1.1, and more preferably from 0.95 to 1.05. By making the wavelength dependency of the retardation fall within such a range, it becomes easy to obtain a wavelength plate having a specific retardation against two laser beams having a different wavelength.

$$Re(\lambda)/Re(550) \qquad (b)$$

wherein Re(λ) represents a retardation value at an arbitrary wavelength; and Re(550) represents a retardation value at a wavelength of 550 nm.

In the invention, the two laser beams having a different wavelength mean, for example, a laser beam of 785 nm to be used for CD or CD-R and a laser beam of 650 nm for DVD. Also, a combination of a blue laser at about 400 nm as developed recently and any one of the foregoing two kinds of red lasers may be employed.

The wavelength plate of the invention reveals a function as a so-called "1/4 λ plate" which achieves mutual conversion between linearly polarized light and circularly polarized light against a first laser beam. In order to reveal such a function, it is necessary that a value of the following formula (a) is usually [(0.2 to 0.3) + X], preferably [(0.22 to 0.28) + X], and more preferably [(0.24 to 0.26) + X] (wherein X represents 0 or the number of an integral multiple of 0.5).

In order that the wavelength plate may function as a "λ plate" which does not substantially contribute to conversion of the polarized state against a second laser beam, it is necessary that the value of the following formula (a) is usually [(0.8 to 1.2) + Y], preferably [(0.9 to 1.1) + Y], and more preferably [(0.95 to 1.05) + Y] (wherein Y represents 0 or an integer of 1 or more).

$$Re(\lambda)/\lambda \qquad (a)$$

wherein λ represents a wavelength (nm) of the laser beam; and Re(λ) represents a retardation value (nm) of the laser beam having transmitted through the wavelength plate.

It is preferable that the vale within the parenthesis of the formula [(0.20 to 0.30) + X] which represents the value of the foregoing formula (a) is closed to 0.25. When this value is a value less than 0.20 or a value exceeding 0.30, mutual conversion efficiency between linearly polarized light and circularly polarized light becomes low so that elliptically polarized light is formed. Thus, when used in an optical information recording and reproducing device, the precision becomes worse, and therefore, such is not preferable.

It is preferable that the vale within the parenthesis of the formula [(0.8 to 1.2) + Y] which represents the value of the foregoing formula (a) is closed to 1. When this value is a value less than 0.8 or a value exceeding 1.2, elliptically polarized light is formed, whereby the polarized state of the transmitted light is changed. Thus, when used in an optical information recording and reproducing device, the precision becomes worse, and therefore, such is not preferable.

In the wavelength plate of the invention, ones in which the wavelength of the first laser beam is shorter than the wavelength of the second laser beam are preferable because they are practically useful and easily manufactured. Examples of such a combination of laser beams include the case where the wavelength of the first laser beam is 650 nm, and the wavelength of the second laser beam is 785 nm. This case can be suitably used as a wavelength plate for an optical information recording and reproducing device corresponding to two kinds of optical disks of CD or CD-R and DVD.

Although the wavelength plate of the invention is required to have a retardation of from 780 to 845 nm against a laser beam of 650 nm and a retardation of from 628 to 942 nm against a laser beam of 785 nm, by using a retardation film made of a cyclic olefin based resin film in which the wavelength dependency of the foregoing retardations falls within a specific range, these requirements can be easily achieved.

In the invention, for the sake of obtaining the desired retardations, plural sheets of retardation films made of a cyclic olefin based film may be laminated. Such lamination may be lamination among the films, or a transparent support such as glass may be interposed between the films. Further, plural sheets of transparent supports having the film bonded thereto may be laminated, and the laminated films may be interposed by transparent supports such as glass. Above all, the method of using a transparent support is preferable because the durability of the resulting wavelength plate is improved.

For the lamination, known optical adhesives such as natural rubber based, synthetic rubber based, vinyl acetate/vinyl chloride copolymer based, silicone based, polyvinyl ether based, acrylic, modified polyolefin based, epoxy based or urethane based adhesives, ultraviolet light-curable adhesives, and acrylic adhesives can be used. Also, for the lamination, the surface of the retardation film or transparent support may be subjected to ground treatment such as corona treatment, plasma treatment, coupling agent treatment, and anchor coating treatment.

In the case of laminating plural retardation films, the lamination is carried out such that the optical axes (fast axes or slow axes) of the respective retardation films become parallel. By carrying out the lamination while making the optical axes in parallel, it is possible to reveal the function as the "1/4 λ plate" or "λ plate" against two laser beams having a different wavelength. When the retardation films are laminated in this way, the retardation required for one sheet of retardation film can be made small, and the magnification at the time of stretching may be made small. As a result, when used as a wavelength plate, it is possible to make a degree of scatter of the retardation small.

Although the number of sheets to be laminated is not particularly limited, when the number of sheets to be laminated increases, it becomes difficult to adjust an angle of an optical axis of each of the retardation films and laminate them. Also, the transmittance of the light beam may be possibly lowered. Thus, the number of sheets to be laminated is usually from 2 to 10 sheets, preferably from 2 to 5 sheets, and more preferably from 2 to 3 sheets.

A width of deviation of the optical axes which is substantially tolerant in laminating is usually ±15 degrees, preferably ±10 degrees, and more preferably ±5 degrees. By carrying out the lamination within this range, it is possible to reveal accurately a function as the "1/4 λ plate" or "λ plate" against two laser beams having a different wavelength.

In the invention, an antireflection film may be laminated on one surface or both surfaces of the retardation film made of a cyclic olefin based resin or the transparent support.

Examples of a method for forming an antireflection film include a method in which a fluorine based copolymer is dissolved in an organic solvent, and the solution is coated on the foregoing film or a sheet material or a retardation plate by using a bar coater or the like by the casting method or the like, followed by heating for curing by using a press. It is considered that the heating temperature is a temperature of usually from 80 to 165°C, and preferably from 100 to 150°C; and that the heating time is usually from 10 minutes to 3 hours, and preferably from 30 minutes to 2 hours.

It is considered that a thickness of the antireflection film is usually from 5 to 2,000 nm, preferably from 10 to 1,000 nm, and more preferably from 50 to 200 nm. When the thickness of the antireflection film is less than 5 nm, the antireflection effect cannot be revealed, whereas when it exceeds 2,000 nm, the thickness of the coated film is liable to become uneven and the appearance or the like becomes worse, and therefore, it is considered that such is not preferable.

Also, it is possible to form the antireflection film by providing a coating layer of a transparent inorganic oxide such as aluminum, magnesium, and silicon by the vapor deposition method or sputtering method.

In the case of such an inorganic antireflection film, it is considered that the thickness of the transparent inorganic oxide coating layer is 1/4 of a specific light wavelength. Further, it is considered that by laminating such transparent inorganic oxide coating layers in the multilayered state the antireflection performance can be further improved.

In the invention, by bonding the retardation film onto the transparent support, it is possible to improve the durability and stability as a wavelength plate. Such a transparent support is preferably one not substantially having birefringence. What the transparent support has birefringence is not preferable because the characteristics as a wavelength plate are affected. Also, though a support made of an organic material and/or an inorganic material can be used as the transparent support, the case where the support is made of an inorganic material is preferable; and a glass is especially preferable from the standpoints that it does not substantially have birefringence and it has excellent optical characteristics such as transparency.

On the other hand, in the case where an organic material is used, one having a continuously usable temperature in the state that it is molded into a support (a temperature at which neither deformation nor coloration occurs even upon exposure for 1,000 hours or more) of usually 100°C or higher, preferably 120°C or higher, and more preferably 150°C or higher and a water vapor permeability of usually not more than 20 $g/m^2 \cdot 24$ hr, preferably not more than 10 $g/m^2 \cdot 24$ hr, and more preferably not more than 5 $g/m^2 \cdot 24$ hr under conditions at 40°C and 90% RH is suitably used. In the case where the continuously usable temperature or the water vapor permeability falls outside the foregoing range, when used as a wavelength plate over a long period of time, there is some possibility that initial characteristics change due to coloration or deformation, resulting in a problem. Therefore, such is not preferable. Also, in the case of an organic material is used, for the purpose of more preventing the deformation due to heat or stress, the thickness is usually from 0.5 to 5 mm, and preferably from 0.5 to 1 mm. When the thickness is thinner than this range, there is some possibility that deformation occurs due to heat or a stress, or the water vapor permeability falls outside the foregoing range. On the other hand, when the thickness is too thick, not only the film is hardly processed, but also the light transmittance is lowered.

Examples of such an organic material which can be used as the transparent support include thermosetting epoxy resins, polyallylates, heat resistant acrylic resins, polysulfones, polycarbonate, polyethersulfones, and cyclic olefin based resins.

Difference between the refractive index of the transparent support and the refractive index of the adhesive layer is preferably within 0.20, more preferably within 0.15, especially preferably within 0.10, and most preferably within 0.05. Also, a difference in the refractive index between the transparent support and the resin film of the invention is preferably within 0.20, more preferably within 0.15, especially preferably within 0.10, and most preferably within 0.05. By making the difference in the refractive index fall within this range, it is possible to control a loss due to reflection of the transmitted light at the minimum level, and therefore, such is preferable.

In the invention, the shape of the transparent support is not particularly limited and may be tabular or may be one having an optical function such as a lattice shape and a prism shape. The thickness is usually from 0.01 to 5 mm, preferably from 0.05 to 3 mm, and more preferably from 0.05 to 1 mm. When the thickness is less than 0.01 mm, not only the stiffness is insufficient, but also the handling properties are deteriorated. On the other hand, when it exceeds 5 mm, the size as a wavelength plate becomes large so that it is difficult to miniaturize an optical device.

An in-plane aberration of the wavelength plate of the invention is preferably within 30 (m$\lambda$), more preferably within 20 (m$\lambda$), especially preferably within 10 (m$\lambda$), and most preferably within 5 (m$\lambda$). By making the in-plane aberration of the wavelength plate fall within the foregoing range, a good S/N and a tolerable jitter range are obtained, and therefore, such is preferable. Here, $\lambda$ represents a wavelength of monochromic light.

It is preferable that the number of foreign matters in the wavelength plate of the invention is as small as possible. The number of foreign matters having a mean particle size of 10 $\mu$m or more is usually not more than 10/$mm^2$, preferably not more than 5/$mm^2$, and more preferably not more than 1/$mm^2$. When foreign matters of 10 $\mu$m or more are present in the number exceeding 10/$mm^2$ in the wavelength plate, a noise signal becomes large and the S/N ratio becomes

small, and therefore, such is not preferable. Here, the foreign matters in the wavelength plate include ones that lower transmission of laser beams and ones that largely change the advance direction of laser beams due to the presence of these foreign matters. Examples of the former include dusts or dirt, resin scorches or metal powders, and powders of minerals, etc.; and examples of the latter include contaminants of other resins and transparent substances having a different refractive index.

For the purpose of shielding or lowering transmission of light other than one having a desired wavelength according to the need such as a reduction of noise, the wavelength plate of the invention may be colored with a known coloring agent, etc.

Since the wavelength plate of the invention uses a cyclic olefin based resin film having high heat resistance, low hygroscopicity, high adhesion to various materials, and stable retardation value, it is a wavelength plate which is cheap and has high performance over a long period of time. When the wavelength plate of the invention is used, it is possible to manufacture an optical information recording and reproducing device which is cheap and has high performance over a long period of time.

As described previously, with respect to recording of voices and images, an optical information recording and producing device using the wavelength plate of the invention can be applied to any of a reproduction-only recording medium, a write-once type recording medium, and a rewritable type recording medium and can be used in recording devices such as CD-ROM, CD-R, and rewritable DVD and OA instruments using the same, acoustic reproducing devices such as CD, image reproducing devices such as DVD and AV instruments using the same, game machines using the foregoing CD or DVD, and the like.

EXAMPLES

The invention will be more specifically described below with reference to the Examples, but it should not be construed that the invention is limited to these Examples. Incidentally, in the Examples, all parts and percentages mean parts by weight and % by weight, respectively unless otherwise indicated. Also, various measurements in the Examples are as follows.

Inherent viscosity ($[\eta]_{inh}$)

The inherent viscosity was measured by an Ubbelohde's viscometer using chloroform or cyclohexane as a solvent under conditions at a polymer concentration of 0.5 g/dl and 30°C.

Gel content

50 g of a hydrogenated (co)polymer was dissolved in chloroform at a temperature of 25°C such that the concentration became 1%; this solution was filtered using a membrane filter having a pore size of 0.5 μm, the weight of which had been previously measured (manufactured by Advantec Toyo Kaisha, Ltd.); the filter after filtration was dried; and the gel content was calculated from an increase of its weight.

Hydrogenation degree

In the case of a hydrogenated homopolymer, $^1$H-NMR was measured at 500 MHz, and the hydrogenation degree was measured from a ratio of absorption intensity between methyl hydrogen of the ester group and olefin-based hydrogen, or a ratio of absorption intensity between paraffin-based hydrogen and olefin-based hydrogen. Also, in the case of a hydrogenated copolymer, the $^1$H-NMR absorption of the copolymer after polymerization and that of the hydrogenated copolymer after hydrogenation were compared, thereby calculating the hydrogenation degree.

Glass transition temperature

The glass transition temperature was measured at a temperature-rise rate of 10°C/min in a nitrogen atmosphere by a scanning colorimeter (DSC).

Film thickness

The film thickness was measured using a laser focus displacement meter, LT-8010, manufactured by Keyence Corporation.

Retardation value

The retardation value was measured at a wavelength of 480, 550, 590, 630 and 750 nm, respectively using KOBRA-21ADH, manufactured by Oji Scientific Instruments, and with respect to other portions than the foregoing wavelengths, the retardation value was calculated according to the Cauchy dispersion equation using the retardation values at the foregoing wavelengths.

Synthesis Example 1

250 parts of 8-methyl-8-methoxycarbonyltetracyclo[4.4.0.$1^{2,5}$.$1^{7,10}$]-3-dodecene (specific monomer), 27 parts of 1-hexene (molecular weight modifier), and 750 parts of toluene (solvent for ring-opening polymerization reaction) were charged in a reactor which had been purged with nitrogen, and this solution was heated at 60°C. Next, 0.62 parts of a toluene solution of triethylaluminum (1.5 moles/liter) as a polymerization catalyst and 3.7 parts of a toluene solution (concentration: 0.05 moles/liter) of tungsten hexachloride having been modified with t-butanol and methanol (t-butanol/methanol/tungsten = 0.35/0.3/1 by mole) were added to the solution in the reactor, and this system was subjected to ring-opening polymerization reaction by heating and stirring at 80°C for 3 hours, thereby obtaining a ring-opening polymer solution. In this polymerization system, the polymerization conversion was 97%, and the resulting ring-opening polymer had an inherent viscosity ($[\eta]_{inh}$), as measured in chloroform at 30°C, of 0.62 dl/g.

4,000 parts of the thus obtained ring-opening polymer solution was charged in an autoclave, 0.48 parts of $RuHCl(CO)[P(C_6H_5)_3]_3$ was added to this ring-opening polymer solution, and the mixture was subjected to hydrogenation reaction by heating and stirring for 3 hours under conditions at a hydrogen gas pressure of 100 $kg/cm^2$ and a reaction temperature of 165°C.

After cooling the resulting reaction solution (hydrogenated polymer solution), the pressure of the hydrogen gas was released. This reaction solution was poured into a large amount of methanol, and a solidified material was separated and recovered, and then dried, thereby obtaining a hydrogenated polymer (hereinafter referred to as "resin A").

The hydrogenation degree of the thus obtained resin A was measured using $^1$H-NMR and found to be 99.9%. Also, the glass transition temperature (Tg) of the subject resin was measured by the DSC method and found to be 165°C. Also, the subject resin was measured for a number average molecular weight (Mn) and a weight average molecular weight (Mw) as reduced into polystyrene by the GPC method (solvent: tetrahydrofuran). As a result, the number average molecular weight (Mn) was 42,000; the weight average molecular weight (Mw) was 180,000; and the molecular weight distribution (Mw/Mn) was 4.29. The saturated water absorption at 23°C of the subject resin was measured and found to be 0.3%. The SP value was measured and found to be 19 ($MPa^{1/2}$). The inherent viscosity ($[\eta]_{inh}$) in chloroform at 30°C of the subject resin was measured and found to be 0.67 dl/g. The gel content was 0.4%.

Synthesis Example 2

A hydrogenated polymer was obtained in the same manner as in Synthesis Example 1, except that 225 parts of 8-methyl-8-methoxycarbonyltetracyclo-[4.4.0.$1^{2,5}$.$1^{7.10}$]-3-dodecene and 25 parts of bicyclo[2.2.1]hept-2-ene were used as specific monomers and that the addition amount of 1-hexene (molecular weight modifier) was changed to 43 parts. The resulting hydrogenated polymer (hereinafter referred to as "resin B") had a hydrogenation degree of 99.9%.

Synthesis Example 3

A hydrogenated polymer was obtained in the same manner as in Synthesis Example 1, except that 215 parts of 8-methyl-8-methoxycarbonyltetracyclo-[4.4.0.$1^{2,5}$.$1^{7.10}$]-3-dodecene and 35 parts of bicyclo[2.2.1]hept-2-ene were used as specific monomers and that the addition amount of 1-hexene (molecular weight modifier) was changed to 18 parts. The resulting hydrogenated polymer (hereinafter referred to as "resin C") had a hydrogenation degree of 99.9%.

Film Production Example 1

The resin A was dissolved in toluene in a concentration of 30% (solution viscosity at room temperature: 30,000 mPa·S), and the solution was coated on a 100 μm-thick PET film (LUMILAR U94, manufactured by Toray Industries, Inc.) the surface of which had been made hydrophilic (easily adhesive) with an acrylic material using an INVEX labcoater, manufactured by Inoue Kinzoku Kogyo Co., Ltd. such that the film thickness after drying was 100 μm, followed by primary drying at 50°C and then secondary drying at 90°C. There was thus obtained a resin film A peeled apart from the PET film. The resulting film had an amount of the residual solvent of 0.5%.

This film was determined for a photoelastic coefficient ($C_P$) and a stress-optical coefficient ($C_R$) in the following manners. Specifically, with respect to the photoelastic coefficient ($C_P$), after applying a rectangular sample with several

kinds of constant loads at room temperature (25°C), it was calculated from a generated retardation and a stress which the sample received at that time. With respect to the stress-optical coefficient ($C_R$), after applying a film-like sample with several kinds of constant loads at the Tg or higher and gradually cooling to return to room temperature in the elongated state by several percents, it was calculated from a generated retardation and a stress as applied. As a result, the $C_P$ and the $C_R$ were 4 ($\times 10^{-12}$ $Pa^{-1}$) and 1,750 ($\times 10^{-12}$ $Pa^{-1}$), respectively.

The characteristic values of the resin film A are shown in Table 1.

Film Production Example 2

Using the resin B, a resin film B was obtained in the same manner as in Film Production Example 1. The resulting resin film B had an amount of the residual solvent of 0.5%, a photoelastic coefficient (Cp) of 6 ($\times 10^{-12}$ $Pa^{-1}$), and a stress-optical coefficient ($C_R$) of 2,000 ($\times 10^{-12}$ $Pa^{-1}$).

The characteristic values of the resin film B are shown in Table 1.

Film Production Example 3

Using the resin C, a resin film C was obtained in the same manner as in Film Production Example 1. The resulting resin film B had an amount of the residual solvent of 0.5%, a photoelastic coefficient ($C_P$) of 9 ($\times 10^{-12}$ $Pa^{-1}$), and a stress-optical coefficient ($C_R$) of 2,350 ($\times 10^{-12}$ $Pa^{-1}$).

The characteristic values of the resin film B are shown in Table 1.

Example 1

In a tenter, the foregoing resin film A was heated at 170°C which is (Tg + 10°C), uniaxially stretched at a stretching rate of 400%/min and a stretching magnification of 3.4 times, cooled in an atmosphere at 110°C for about one minute while keeping this state, further cooled to room temperature, and then taken out. As a result, a retardation film A-1 having a thickness of 55 μm could be obtained. A glass sheet having a thickness of 250 μm was laminated on one surface of this retardation film A-1 using an acrylic adhesive having a thickness of 10 μm. thereby obtaining a wavelength plate A-1. It was confirmed that this wavelength plate A-1 had a retardation of 810 nm at a wavelength of 650 nm and a retardation of 805 nm at a wavelength of 785 nm.

It was confirmed by an optical polarizing microscope that the number of foreign matters of 10 μm or larger in the wavelength plate A-1 was 10 or less.

Example 2

A retardation film A-2 having a thickness of 70 μm could be obtained in the same manner as in Example 1, except that in the stretching method, the stretching magnification was changed to 1.8 times. Two sheets of this retardation film A-2 were bonded and laminated in the same manner as in Example 1 in a construction that a glass sheet was interposed therebetween while making their optical axes (fast axes) parallel, thereby obtaining a wavelength plate A-2. It was confirmed that this wavelength plate A-2 had a retardation of 812 nm at a wavelength of 650 nm and a retardation of 806 nm at a wavelength of 785 nm.

It was confirmed by an optical polarizing microscope that the number of foreign matters of 10 μm or larger in the wavelength plate A-2 was 10 or less.

Example 3

Using the resin film B, a retardation film B having a thickness of 65 μm was obtained in the same manner as in Example 1, except that in the stretching condition, the stretching magnification was changed to 2.0 times, and the heating temperature was changed to 145 °C. Using one sheet of this retardation film B, a wavelength plate B was obtained in the same manner as in Example 1. It was confirmed that this wavelength plate B had a retardation of 810 nm at a wavelength of 650 nm and a retardation of 802 nm at a wavelength of 785 nm.

It was confirmed by an optical polarizing microscope that the number of foreign matters of 10 μm or larger in the wavelength plate B was 10 or less.

Example 4

Using the resin film C, a retardation film C having a thickness of 70 μm was obtained in the same manner as in Example 1, except that in the stretching condition, the stretching magnification was changed to 1.8 times, and the

heating temperature was changed to 130°C. Also, using one sheet of this retardation film C, a wavelength plate C was obtained in the same manner as in Example 1. It was confirmed that this wavelength plate C had a retardation of 810 nm at a wavelength of 650 nm and a retardation of 800 nm at a wavelength of 785 nm.

It was confirmed by an optical polarizing microscope that the number of foreign matters of 10 μm or larger in the wavelength plate C was 10 or less.

Example 5

As an optical information recording and reproducing device using the wavelength plate of the invention, the foregoing wavelength plates A-1, A-2, B and C were independently used and evaluated with respect to writing and reading of the information over a long period of time (under the atmosphere at 80°C and 90% RH) using an optical pickup device 10 using a wavelength plate. That is, in the optical pickup device 10, two kinds of a laser diode (LD) 20 as a laser beam source are arranged in a line and emit laser beams having a wavelength of 650 nm and 785 nm, respectively; a polarizing beam splitter (PBS) 21, a wavelength plate (QWP) 22, and an objective lens 23 are disposed in the way of the outward journey toward an optical recording medium 23; and in the homeward journey, return light as reflected from the optical recording medium 24 passes through the objective lens 23 and the wavelength plate 22, is changed in its travel direction by 90 degrees by the PBS 21, and then reaches an optical detector 25. As a result, it was noted that in addition to good initial characteristics, all of these wavelength plates exhibited a change rate of the initial characteristics falling within 1% even after lapsing 3,000 hours and revealed good stability. In particular, with respect to the wavelength plate A-1, the change rate fell within 0.5 %, and therefore, it was noted that the characteristics were very stable.

Comparative Example 1

A polycarbonate film was obtained in the same manner as in Film Production Example 1, except for using a polycarbonate A2700, manufactured by Idemitsu Petrochemical Co., Ltd. as the raw material and using methylene chloride as the solvent. The characteristic values of the resulting polycarbonate film are shown in Table 1.

Further, in a tenter, this film was heated at 160°C which is (Tg + 5°C), stretched at a stretching rate of 400%/min and a stretching magnification of 1.4 times, cooled in an atmosphere at 110°C for about one minute while keeping this state, further cooled to room temperature, and then taken out. As a result, a polycarbonate-made retardation film D having a thickness of 80 μm could be obtained.

Using one sheet of this retardation film D, a wavelength plate D was obtained in the same manner as in Example 1. It was confirmed that this wavelength plate D had a retardation of 810 nm at a wavelength of 650 nm and a retardation of 770 nm at a wavelength of 785 nm.

Comparative Example 2

The wavelength plate D obtained in Comparative Example 1 was tested for initial characteristics and long-term use in the same manner as in Example 5. As a result, though the initial characteristics were slightly inferior to those in the wavelength plates A-1 to C, the change rate against the initial characteristics after the use for 3,000 hours became 5%, and therefore, it was noted that there was a problem in stability of the characteristics.

Table 1

| | Tg (°C) | $C_P$, $C_R$ ($\times 10^{-12} Pa^{-1}$) | Thickness (μm) | Amount of residual solvent (%) | Total light transmittance (%) | Retardation at 590 nm (nm) |
|---|---|---|---|---|---|---|
| Resin film A | 165 | 4, 1,750 | 100 | 0.5 | 93 | 6.8 |
| Resin film B | 140 | 6, 2,000 | 100 | 0.5 | 93 | 6.8 |
| Resin film C | 125 | 9, 2,350 | 100 | 0.5 | 93 | 6.8 |
| Polycarbonate film | 155 | 150, 4,700 | 100 | 0.4 | 90 | 25.5 |

INDUSTRIAL APPLICABILITY

Since the wavelength plate of the invention uses a cyclic olefin based resin film having high heat resistance, low hygroscopicity, high adhesion to various materials, and stable retardation value, it is a wavelength plate which is

cheap and has high performance over a long period of time. When the wavelength plate of the invention is used, it is possible to manufacture an optical information recording and reproducing device which is cheap and has high performance over a long period of time. As described previously, with respect to recording of voices and images, an optical information recording and producing device using the wavelength plate of the invention can be applied to any of a reproduction-only recording medium, a write-once type recording medium, and a rewritable type recording medium and can be used in recording devices such as CD-ROM, CD-R, and rewritable DVD and OA instruments using the same, acoustic reproducing devices such as CD, image reproducing devices such as DVD and AV instruments using the same, game machines using the foregoing CD or DVD, and the like.

**Claims**

1. A wavelength plate laser optical system which is a wavelength plate using a stretched and oriented film containing a cyclic olefin based resin, **characterized by** having values of the following formula (a) against two laser beams having a different wavelength such that the value is ((0.2 to 0.3) + X) for a first laser beam and that the value is ((0.8 to 1.2) + Y) for a second laser beam, respectively (wherein X represents 0 or the number of an integral multiple of 0.5; and Y represents 0 or an integer of 1 or more):

$$Re(\lambda)/\lambda \qquad (a)$$

wherein $\lambda$ represents a wavelength (nm) of the laser beam; and $Re(\lambda)$ represents a retardation value (nm) of the laser beam having transmitted through the wavelength plate.

2. The wavelength plate laser optical system according to claim 1, wherein in the formula (a), X is 1, and Y is 0.

3. The wavelength plate laser optical system according to claim 1 or 2, wherein plural sheets of the stretched and oriented film containing a cyclic olefin based resin are laminated such that the respective optical axes become parallel and used.

4. The wavelength plate laser optical system according to any one of claims 1 to 3, wherein the stretched and oriented film containing a cyclic olefin based resin is bonded and fixed onto a transparent support.

5. The wavelength plate laser optical system according to any one of claims 1 to 4, wherein the cyclic olefin based resin is at least one member selected from the group consisting of (1) a ring-opening polymer of a specific monomer represented by the following general formula (1); (2) a ring-opening copolymer of a specific monomer represented by the following general formula (1) and a copolymerizable monomer; (3) a hydrogenated (co)polymer of the foregoing ring-opening (co)polymer (1) or (2); (4) a (co)polymer resulting from cyclization of the foregoing ring-opening (co) polymer (1) or (2) by the Friedel-Crafts reaction and then hydrogenation; (5) a saturated copolymer of a specific monomer represented by the following general formula (1) and an unsaturated double bond-containing compound; and (6) an addition type (co)polymer of at least one monomer selected from a specific monomer represented by the following general formula (1), a vinyl based cyclic hydrocarbon based monomer and a cyclopentadiene based monomer, and a hydrogenated (co)polymer thereof:

General Formula (1)

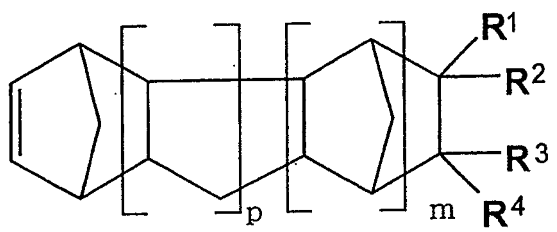

wherein $R^1$ to $R^4$ each represents a hydrogen atom, a halogen atom, a hydrocarbon group having from 1 to 30

carbon atoms, or other monovalent organic group, and may be the same or different; $R^1$ and $R^2$, or $R^3$ and $R^4$ may be taken together to form a divalent hydrocarbon group; $R^1$ or $R^2$ and $R^3$ or $R^4$ may be bonded to each other to form a monocyclic or polycyclic structure; m represents 0 or a positive integer; and p represents 0 or a positive integer.

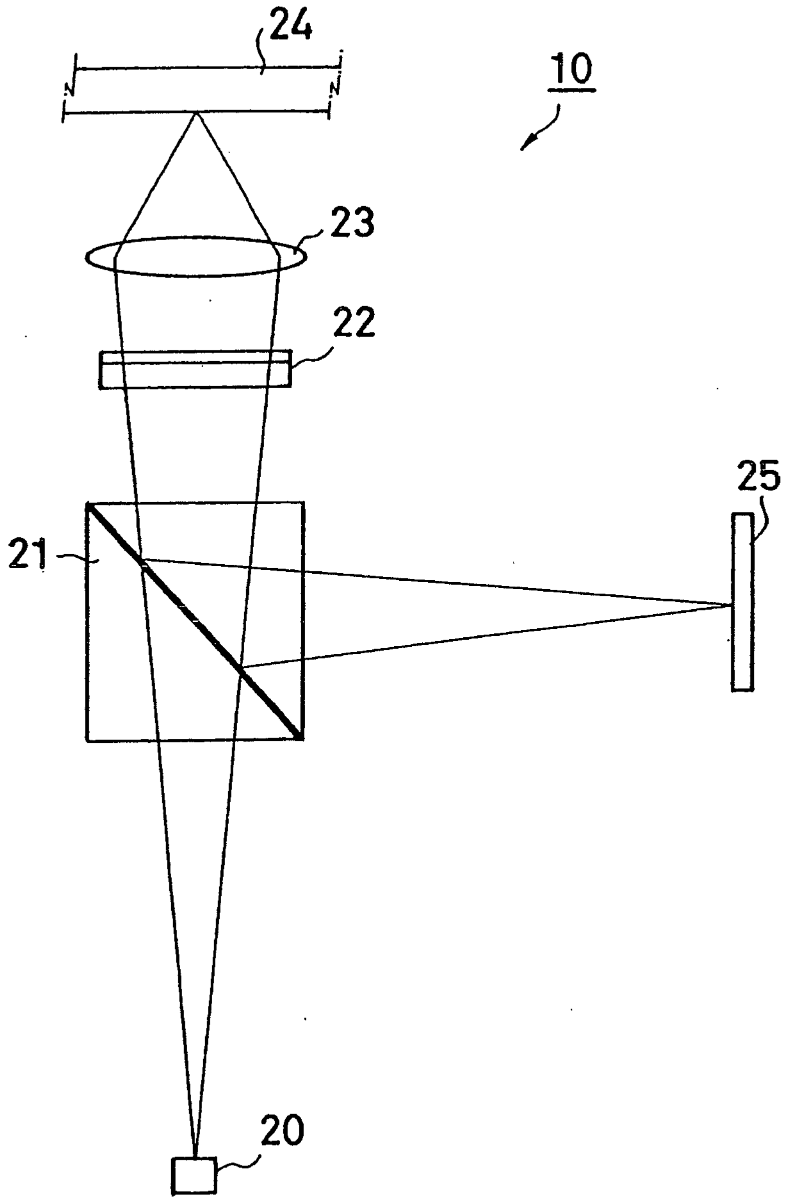
24
10
23
22
25
21
20

## INTERNATIONAL SEARCH REPORT

International application No.
PCT/JP03/15463

**A. CLASSIFICATION OF SUBJECT MATTER**

Int.Cl[7] G02B5/30, C08F8/04, C08J5/18, C08L45:00

According to International Patent Classification (IPC) or to both national classification and IPC

**B. FIELDS SEARCHED**

Minimum documentation searched (classification system followed by classification symbols)

Int.Cl[7] G02B5/30, C08F8/04, C08J5/18, C08L45:00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-184695 A (Toshiba Corp., Sankyo Seiki Mfg. Co., Ltd.), 06 July, 2001 (06.07.01), Full text (Family: none) | 1-5 |
| Y | JP 10-214431 A (Matsushita Electric Industrial Co., Ltd.), 11 August, 1998 (11.08.98), Full text (Family: none) | 1-5 |
| Y | WO 02/088783 A1 (JSR CORP.), 07 November, 2002 (07.11.02), Full text & JP 2003-14901 A | 1-5 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 March, 2004 (05.03.04) | 23 March, 2004 (23.03.04) |
| Name and mailing address of the ISA/ Japanese Patent Office | Authorized officer |
| Facsimile No. | Telephone No. |

Form PCT/ISA/210 (second sheet) (July 1998)